**Europäisches Patentamt**

**European Patent Office**

**Office européen des brevets**

(19)

(11) Veröffentlichungsnummer : **0 424 663 B1**

(12)                **EUROPÄISCHE PATENTSCHRIFT**

(45) Veröffentlichungstag der Patentschrift :
02.12.92 Patentblatt 92/49

(51) Int. Cl.⁵ : **G01C 19/72**

(21) Anmeldenummer : **90117972.1**

(22) Anmeldetag : **17.09.90**

(54) **Verfahren und Anordnung zum Ermitteln von Winkelgeschwindigkeiten.**

(30) Priorität : **24.10.89 DE 3935357**

(43) Veröffentlichungstag der Anmeldung :
**02.05.91 Patentblatt 91/18**

(45) Bekanntmachung des Hinweises auf die
Patenterteilung :
**02.12.92 Patentblatt 92/49**

(84) Benannte Vertragsstaaten :
**DE FR GB IT**

(56) Entgegenhaltungen :
**US-A- 4 765 739**
**US-A- 4 796 993**

(73) Patentinhaber : **ANT Nachrichtentechnik
GmbH
Gerberstrasse 33
W-7150 Backnang (DE)**

(72) Erfinder : **Göckler, Heinz, Dr.-Ing.
Elbinger Str. 52
7150 Backnang (DE)**

EP 0 424 663 B1

## Beschreibung

Die vorliegende Erfindung betrifft ein Verfahren und eine Anordnung zum Ermitteln von Winkelgeschwindigkeiten mit Hilfe eines optischen Faserringinterferometers, wobei die mindestens eine Lichtleitfaserwindung durchlaufenden Lichtwellen sinusförmig phasenmoduliert werden und von einigen Spektrallinien der aus der Lichtleitfaser austretenden interferierenden Lichtwellen die Amplituden bestimmt werden und daraus die der Winkelgeschwindigkeit proportionale Sagnac-Phase ermittelt wird.

Ein Verfahren und eine Anordnung dieser Art geht aus der DE 31 40 110 A1 hervor. In der einen ringförmigen Lichtweg bildenden Lichtleitfaser des Ringinterferometers breiten sich zwei gegenläufige Lichtwellen aus, die beim Austritt aus der Lichtleitfaser miteinander interferieren. Die Interferenz hängt von der Winkelgeschwindigkeit ab, mit der die mindestens eine Windung bildende Lichtleitfaser gedreht wird. Der Winkelgeschwindigkeit ist die Phasendifferenz zwischen den beiden Lichtwellen, welche die Lichtleitfaser in entgegengesetzte Richtungen durchlaufen haben, proportional. Diese Phasendifferenz, sie wird als Sagnac-Phase bezeichnet, läßt sich, wie der DE 31 40 110 A1 zu entnehmen ist, aus den Amplituden der Spektrallinien des aus der Lichtleitfaser austretenden Interferenzlichts bestimmen. Das Verfahren gemäß der DE 31 40 110 A1, nach dem die Sagnac-Phase aus der Amplitude zweier Spektrallinien ermittelt wird, verlangt, daß der Modulationsindex der am Ausgang des Lichtweges erfolgenden Phasenmodulation mit einer Regelschaltung auf einem konstanten Wert gehalten wird.

Der Erfindung liegt nun die Aufgabe zugrunde, ein Verfahren und eine Anordnung der eingangs genannten Art anzugeben, womit sich ohne eine den Modulationsindex der Phasenmodulation konstant haltende Regelschaltung die der Winkelgeschwindigkeit proportionale Sagnac-Phase ermitteln läßt.

Erfindungsgemäß wird diese Aufgabe durch die Merkmale der Ansprüche 1 und 2 gelöst. Eine vorteilhafte Ausbildung der erfundenen Anordnung geht aus dem Anspruch 3 hervor.

Aufgrund der Erfindung kann auf eine aufwendige Regelschaltung verzichtet werden, da hier der Einfluß des Modulationsindex bei der Ermittlung der Sagnac-Phase umgangen wird.

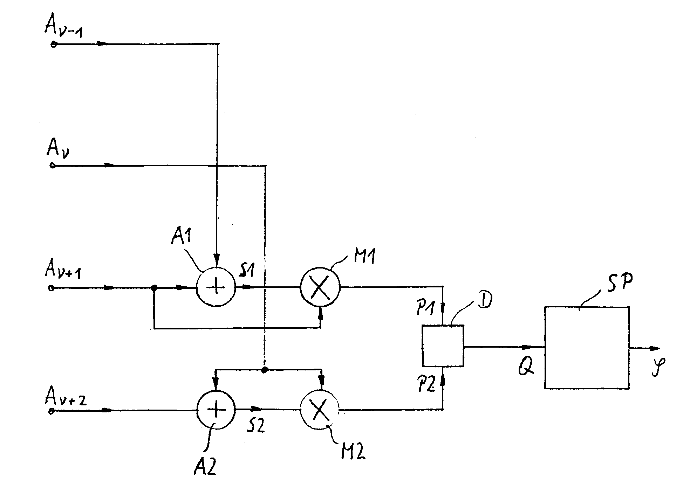

Anhand eines in der Zeichnung dargestellten Ausführungsbeispiels wird nachfolgend die Erfindung näher erläutert. Die einzige Figur zeigt ein Schaltbild, das nach dem weiter unten beschriebenen Verfahren arbeitet.

Das optische Ausgangssignal der Lichtleitfaser wird in bekannter Weise zur Weiterverarbeitung in ein elektrisches Signal umgewandelt. Dieses elektrische Ausgangssignal $i(t)$ des optischen Faserringinterferometers ist, wie z. B. aus der DE 38 29 731 A1 hervorgeht, gegeben durch :

$$i(t) = 2I_o \cos^2 \cdot \{ 1/2[2\varphi + \psi_o\sin2\pi f_m t - \psi_o\sin2\pi f_m(t - \tau)]\} \quad (1)$$

In dieser Beziehung gibt $I_o$ die Intensität des in die Lichtleitfaser eingespeisten Lichts, $\varphi$ die Sagnac-Phase, $\psi_o$ den Modulationsindex der mit der Frequenz $f_m$ durchgeführten sinusförmigen Phasenmodulation und $\tau$ die Laufzeit der Lichtwellen durch die Lichtleitfaser an.

Die zu ermittelnde Meßgröße, die Winkelgeschwindigkeit $\Omega$ des Faserringinterferometers, ist proportional zur Sagnac-Phase

$$\Omega = \frac{\lambda \cdot c}{8\pi N \cdot A} \varphi \quad (2)$$

Hier ist $\lambda$ die Wellenlänge des in die Lichtleitfaser eingespeisten Lichts, c die Lichtgeschwindigkeit, A die von der Lichtleitfaser umschlossenen Fläche und N die Anzahl der Lichtleitfaserwindungen.

Die Beziehung (2) zeigt also, daß die zu messende Winkelgeschwindigkeit $\Omega$ direkt von der Sagnac-Phase $\varphi$ abhängt. Es gilt also nun, die Sagnac-Phase $\varphi$ aus dem Ausgangssignal $i(t)$ des Faserringinterferometers zu ermitteln.

Mit den Additionstheoremen

$$\cos x/2 = \sqrt{(1 + \cos x)/2} \, ,$$
$$\sin x - \sin y = 2\cos[(x + y)/2] \sin[(x - y)/2]$$

und den Abkürzungen

$$\psi = \psi_o \sin\pi f_m = \psi_o \sin\alpha$$

folgt aus Gleichung (1)

$$i(t) = I_o \{1 + \cos[2\varphi(t) + 2\psi \cos(2\pi f_m t - \alpha)]\} \quad (3)$$

und daraus mit

$$\cos(x + y) = \cos x \cos y - \sin x \sin y$$
$$i(t) = I_o\{1 + \cos[2\varphi(t)]\cos[2\psi\cos(2\pi f_m t - \alpha)] - \sin[2\varphi(t)]\sin[2\psi\cos(2\pi f_m t - \alpha)] \quad (4)$$

Mit Besselfunktionen der ersten Art läßt sich Gleichung (4) in eine für die Signalauswertung geeignete Form umschreiben.

$$i(t) = I_o\{1 + \cos 2\psi$$

$$[J_o(2\psi) + 2\sum_{\nu=1}^{\infty} (-1)^{\nu} J_{2\nu}(2\psi) \cos 2\nu (2\pi f_m t - \alpha)]$$

$$-\sin 2\psi [2\sum_{\nu=0}^{\infty} (-1)^{\nu} J_{2\nu+1}(2\psi) \cos(2\nu+1)(2\pi f_m t - \alpha)]\} \quad (5)$$

Dieses Ausgangssignal i(t) läßt sich in seine einzelnen Spektrallinien aufgegliedert folgendermaßen schreiben:

$$
\begin{aligned}
i(t) = \quad & I_o[1 + J_o(2\psi) \cos 2\psi] \\
& -2I_o J_1(2\psi) \sin 2\psi \cos (2\pi f_m t - \alpha) \\
& -2I_o J_2(2\psi) \cos 2\psi \cos 2(2\pi f_m t - \alpha) \\
& +2I_o J_3(2\psi) \sin 2\psi \cos 3(2\pi f_m t - \alpha) \\
& +2I_o J_4(2\psi) \cos 2\psi \cos 4(2\pi f_m t - \alpha)
\end{aligned}
\qquad (6)
$$

$$\cdot$$
$$\cdot$$
$$\cdot$$

Hierin sind die Faktoren $J_n(2\psi)$ mit n = 0, 1, 2, ... die Werte der Besselfunktionen 1. Art der n-ten Ordnung für das Argument $2\psi = 2\psi_o \sin \pi f_m \tau$.

Voraussetzung für die Bestimmung der Winkelgeschwindigkeit $\Omega(t)$ aus dem Ausgangssignal i(t) in Gleichung (6) ist, daß die zeitliche Änderung von $\Omega(t)$ so langsam erfolgt, daß für die über die Fouriertransformation berechenbare Bandbreite B$\varphi$ der Sagnac-Phase gilt:

$$B\varphi \ll f_m$$

In diesem Fall läßt sich von den in (6) aufgeführten Spektrallinien deren Frequenzen ganzzahlige Harmonische der Modulationsfrequenz $f_m$ sind, jede beliebige Spektrallinie mit geeigneten Filtern separieren und daraus die Sagnac-Phase $\varphi(t)$ bzw. die Winkelgeschwindigkeit $\Omega(t)$ bestimmen. Die an den Ausgängen solcher Filter abgreifbaren Amplituden der einzelnen in (6) angegebenen Spektrallinien sind dann:

$$
\begin{aligned}
A_1 &= 2I_o J_1(2\psi)\,|\sin 2\psi| \\
A_2 &= 2I_o J_2(2\psi) \cos 2\psi \\
A_3 &= 2I_o J_3(2\psi)\,|\sin 2\psi| \\
A_4 &= 2I_o J_4(2\psi) \cos 2\psi
\end{aligned}
\qquad (7)
$$

Allgemein kann man für die $\nu$-te Spektrallinien-Amplitude, wenn $\nu$ geradzahlig ist, schreiben:

$$A\nu = 2I_o J_\nu(2\psi) \cos 2\varphi \quad (8)$$

Mit der allgemeingültigen Beziehung

$$J_{\nu-1}(\eta) + J_{\nu+1}(\eta) = \frac{2\nu}{\eta} J_\nu(\eta)$$

läßt sich die Gleichung (8) so schreiben:

$$A\nu = 2I_o \frac{2\varphi}{2_\nu} [J_{\nu-1}(2\psi) + J_{\nu+1}(2\varphi)] \cos 2\varphi \quad (9)$$

und entsprechend

$$A_{v+1} = 2I_o \frac{2\psi}{2(v+1)} [J_v(2\psi) + J_{v+2}(2\psi)] |\sin 2\varphi| \quad (10)$$

Für $v$ geradzahlig ergeben sich entsprechend (7) die Amplituden von vier benachbarten Spektrallinien des Ausgangssignals i(t):

$$A_{v-1} = 2I_o J_{v-1}(2\psi) |\sin 2\varphi|$$
$$A_v = 2I_o J_v(2\psi) \cos 2\varphi$$
$$A_{v+1} = 2I_o J_{v+1}(2\psi) |\sin 2\varphi|$$
$$A_{v+2} = 2I_o J_{v+2}(2\psi) \cos 2\varphi \quad (11)$$

Bildet man den Quotienten der Amplituden gemäß (9) und (10)

$$\frac{A_{v+1}}{A_v} = \frac{v}{v+1} \frac{J_v(2\psi) + J_{v+2}(2\varphi)}{J_{v-1}(2\psi) + J_{v+1}(2\psi)} |\tan 2\varphi| \quad (12)$$

mit der Gleichung (11) ergibt sich daraus für die Sagnac-Phase:

$$|\varphi| = \frac{1}{2} \arctan \sqrt{\frac{v+1}{v} \frac{A_{v+1}}{A_v} \frac{A_{v-1} + A_{v+1}}{A_v + A_{v+2}}} \quad (13)$$

Für den Fall, daß $v$ ungeradzahlig ist, ergibt sich in entsprechender Weise für die Sagnac-Phase:

$$|\varphi| = \frac{1}{2} \arctan \sqrt{\frac{v}{v+1} \frac{A_v}{A_{v+1}} \frac{A_v + A_{v+2}}{A_{v-1} + A_{v+1}}} \quad (14)$$

Wie die Gleichungen (13) und (14) zeigen, läßt sich die Sagnac-Phase unbeeinflußt von Schwankungen der Intensität $I_o$ des in die Lichtleitfaser eingespeisten Lichts und von Veränderungen des Modulationsindex $\psi_o$ bestimmen. Deshalb kann vorteilhafterweise auf Regelungen der Lichtintensität $I_o$ und des Modulationsindex $\psi_o$ verzichtet werden.

Die in den Gleichungen (13) und (14) wiedergegebene Sagnac-Phase $\varphi$ läßt sich mit Hilfe der in der Figur dargestellten Schaltungsanordnung auf folgende Weise ermitteln:

Es werden zunächst aus dem elektrischen Ausgangssignal i(t) des Ringinterferometers vier direkt benachbarte Spektrallinien herausgefiltert und deren Amplituden $A_{v-1}, A_v, A_{v+1}$ und $A_{v+2}$ bestimmt. Die Amplituden $A_{v-1}$ und $A_{v+1}$ der zwei Spektrallinien, welche von den vier die niedrigste Frequenz (die $(v-1)$-te Harmonische der Modulationsfrequenz $f_m$) und die zweithöchste Frequenz (die $(v+1)$-te Harmonische der Modulationsfrequenz) haben, von einem ersten Addierer A1 summiert. Aus dieser ersten Summen-Amplitude S1 und der Amplitude $A_{v+1}$ der Spektrallinie mit der zweithöchsten Frequenz bildet ein erster Multiplizierer M1 ein erstes Produkt. Die Amplituden $A_v$ und $A_{v+2}$ der Spektrallinien mit der zweitniedrigsten und der höchsten Frequenz werden von einem zweiten Addierer A2 summiert. Ein zweiter Multiplizierer M2 bildet aus der zweiten Summen-Amplitude S2 und der Amplitude $A_v$ der Spektrallinie mit der zweitniedrigsten Frequenz ein zweites Produkt P2.

Die zwei Produktsignale P1 und P2 werden einem Dividierer D zugeführt. Dieser Dividierer D bildet den Quotienten Q = P1/P2 aus dem ersten und dem zweiten Produktsignal, wenn von den vier ausgewählten Spektrallinien die Spektrallinie $(A_v)$ mit der zweitniedrigsten Frequenz eine geradzahlige Harmonische der Modulationsfrequenz $f_m$ ist, wenn also $v$ geradzahlig ist und damit die Sagnac-Phase $\varphi$ nach der Beziehung (13) zu bestimmen ist.

Ist die Spektrallinie $(A_v)$ mit der zweitniedrigsten Frequenz eine ungeradzahlige Harmonische der Modulationsfrequenz $f_m$, also $v$ ungeradzahlig, dann bildet der Dividierer D gemäß der Beziehung (14) den Quotienten Q = P2/P1 aus dem zweiten und dem ersten Produktsignal.

Das vom Dividierer D erzeugte Quotientensignal Q wird in einem Signalprozessor SP so weiterverarbeitet, daß daraus die zu ermittelnde Sagnac-Phase $\varphi$ resultiert. In diesem Signalprozessor SP wird das Quotientensignal Q mit einem Faktor bewertet. Der Faktor gibt das Verhältnis $(v+1)/v$ der Ordnungszahl $v+1$ derjenigen Harmonischen der Modulationsfrequenz $f_m$, welche mit der zweithöchsten $(v+1)$ Spektrallinien-Frequenz übereinstimmt, zu der Ordnungszahl derjenigen Harmonischen, welche mit der zweitniedrigsten $(v)$ Spektrallinien-Frequenz übereinstimmt, an. Dieser Faktor $(v+1)/v$ wird dann zur Bewertung des Quotientensignals Q herangezogen, wenn die zweitniedrigste $(v)$ Spektrallinien-Frequenz eine geradzahlige Harmonische der Modulationsfrequenz $f_m$ - also $v$ geradzahlig - ist. Für den Fall, daß $v$ ungeradzahlig ist, wird das entsprechende Quotientensignal Q mit dem invertierten Faktor $v/(v+1)$ bewertet. Von dem so bewerteten Quotientensignal wird die Quadratwurzel gebildet und schließlich darauf die Arcustangens-Funktion angewendet. Das Ergebnis dieser Operationen ist dann der doppelte Wert der Sagnac-Phase $\varphi$.

Die einzelnen Operationen - Bewertung des Quotientensignals, Radizierung und Bildung der Arcustangens-Funktion - kann mit einzelnen hintereinander geschalteten analog oder digital arbeitenden Schaltungselementen durchgeführt werden. Dazu wären ein Multiplizierer zur Multiplikation des Quotientensignals mit dem Faktor, wurzelbildende Schaltungsmittel und ein die Arcustangens-Funktion erzeugender Funktionsgenerator erforderlich. Weniger aufwendig wäre ein Signalprozessor, der aus einem Speicher besteht, in dem zu jedem möglichen aus der Division hervorgehenden Quotientensignal ein Wert abspeicherbar ist, der den Arcustangens von dem jeweils mit dem Faktor bewerteten und radizierten Quotientensignal wiedergibt.


**Patentansprüche**

1. Verfahren zum Ermitteln von Winkelgeschwindigkeiten mit Hilfe eines optisches Faserringinterferometers, wobei die mindestens eine Lichtleitfaserwindung durchlaufenden Lichtwellen sinusförmig phasenmoduliert werden und von einigen Spektrallinien der aus der Lichtleitfaser austretenden interferierenden Lichtwellen die Amplituden bestimmt werden und daraus die der Winkelgeschwindigkeit proportionale Sagnac-Phase ermittelt wird, dadurch gekennzeichnet,

daß von vier direkt benachbarten Spektrallinien die Amplituden ( $A_{v-1}$, $A_v$, $A_{v+1}$, $A_{v+2}$) bestimmt werden, daß die Amplituden ($A_{v-1}$, $A_{v+1}$) der zwei Spektrallinien, welche von den ausgewählten vier Spektrallinien die niedrigste und die zweithöchste Frequenz haben, addiert werden und aus dieser ersten Summen-Amplitude (S1) und der Amplitude ($A_{v+1}$) der Spektrallinie mit der zweithöchsten Frequenz ein erstes Produkt (P1) gebildet wird,

daß die Amplituden ($A_v$, $A_{v+2}$) der zwei Spektrallinien mit der zweitniedrigsten und der höchsten Frequenz addiert werden und aus dieser zweiten Summen-Amplitude (S2) und der Amplitude ($A_v$) der Spektrallinie mit der zweitniedrigsten Frequenz ein zweites Produkt (P2) gebildet wird,

daß das erste Produkt (P1) durch das zweite Produkt (P2) dividiert wird, wenn von den vier ausgewählten Spektrallinien die zweitniedrigste Frequenz eine geradzahlige Harmonische der Modulationsfrequenz ist bzw. das zweite Produkt (P2) durch das erste Produkt dividiert wird, wenn von den vier ausgewählten Spektrallinien die zweitniedrigste Frequenz eine ungeradzahlige Harmonische der Modulationsfrequenz ist,

daß, wenn die zweitniedrigste Spektrallinien-Frequenz eine geradzahlige Harmonische der Modulationsfrequenz ist, der betreffende Quotient (Q) mit einem Faktor bewertet wird, der das Verhältnis der Ordnungszahl derjenigen Harmonischen, welche mit der zweithöchsten Spektrallinien-Frequenz übereinstimmt, zu der Ordnungszahl derjenigen Harmonischen angibt, welche mit der zweitniedrigsten Spektrallinien-Frequenz übereinstimmt bzw., wenn die zweitniedrigste Spektrallinien-Frequenz eine ungeradzahlige Harmonische der Modulationsfrequenz ist, der betreffende Quotient (Q) mit dem invertierten Faktor bewertet wird

und daß durch Anwenden der Arcustangens-Funktion auf die Quadratwurzel aus dem jeweiligen bewerteten Quotienten (Q) die Sagnac-Phase ( $\varphi$ ) ermittelt wird.

2. Anordnung zum Ermitteln von Winkelgeschwindigkeiten mit Hilfe eines optischen Faserringinterferometers, der mindestens eine Lichtleitfaserwindung besitzt mit einer die darin sich ausbreitenden Lichtwellen modulierenden Einrichtung, wobei Schaltungseinheiten vorhanden sind, welche von einigen Spektrallinien der aus der Lichtleitfaser austretenden interferierenden Lichtwellen die Amplituden bestimmen und daraus die der Winkelgeschwindigkeit proportionale Sagnac-Phase ermittelt, dadurch gekennzeichnet,

daß ein erster Addierer (A1) vorhanden ist, der von vier direkt benachbarten Spektrallinien die Amplituden ($A_{v-1}$, $A_{v+1}$) der Spektrallinien mit der niedrigsten und der zweithöchsten Frequenz addiert,

daß ein erster Multiplizierer (M1) vorhanden ist, der aus dieser ersten Summen-Amplitude (S1) und der Amplitude ($A_{v+1}$) der Spektrallinie mit der zweithöchsten Frequenz ein erstes Produkt (P1) bildet,

daß ein zweiter Addierer (A2) die Amplituden ($A_v$, $A_{v+2}$) der zwei Spektrallinien mit der zweitniedrigsten und der höchsten Frequenz addiert,

daß ein zweiter Multiplizierer (M2) aus dieser zweiten Summen-Amplitude (S2) und der Amplitude ($A_v$) der Spektrallinie mit der zweitniedrigsten Frequenz ein zweites Produkt (P2) bildet,

daß ein Dividierer (D) das erste Produkt (P1) durch das zweite Produkt (P2) dividiert, wenn von den vier ausgewählten Spektrallinien die zweitniedrigste Frequenz eine geradzahlige Harmonische der Modulationsfrequenz ist bzw. das zweite Produkt (P2) durch das erste Produkt (P1) dividiert, wenn von den vier ausgewählten Spektrallinien die zweitniedrigste Frequenz eine ungeradzahlige Harmonische der Modulationsfrequenz ist,

daß Schaltungsmittel (SP) vorhanden sind, die, wenn die zweitniedrigste Spektrallinien-Frequenz eine geradzahlige Harmonische der Modulationsfrequenz ist, den betreffenden Quotienten (Q) mit einem Faktor bewerten, der das Verhältnis der Ordnungszahl derjenigen Harmonischen, welche mit der zweithöchsten Spektrallinien-Frequenz übereinstimmt, zu derjenigen Harmonischen angibt, welche mit der zweitniedrigsten Spektrallinien-Frequenz übereinstimmt bzw., wenn die zweitniedrigste Spektrallinien-Frequenz eine ungeradzahlige Harmonische der Modulationsfrequenz ist, die Schaltungsmittel (SP) den betreffenden Quotienten (Q) mit dem invertierten Faktor bewerten

und daß die Schaltungsmittel (SP) die Arcustangens-Funktion auf die Quadratwurzel aus dem jeweiligen bewerteten Quotienten (Q) anwenden, woraus die Sagnac-Phase ($\varphi$) resultiert.

3.  Anordnung nach Anspruch 2, dadurch gekennzeichnet, daß die Schaltungsmittel (SP) aus einem Speicher bestehen, in dem zu jedem möglichen aus der Division hervorgehenden Quotienten (Q) ein Wert abspeicherbar ist, der den Arcustangens des jeweils mit dem Faktor bewerteten und radizierten Quotienten (Q) wiedergibt.

## Claims

1.  Method for the ascertaining of angular velocities with the aid of an optical fibre ring interferometer, wherein the lightwaves running through at least one fibre-optical conductor turn are phase-modulated sinusoidally and the amplitudes are ascertained of some spectral lines of the interfering light waves issuing from the fibre-optical conductor and the Sagnac phase proportional to the angular velocity is ascertained therefrom, characterised thereby, that the amplitudes ($A_{v-1}$, $A_v$, $A_{v+1}$, $A_{,+2}$) of four directly adjacent spectral lines are ascertained, that the amplitudes ($A_{v-1}$, $A_{v+1}$) of the two spectral lines, which have the lowest and the second highest frequency of the four selected spectral lines, are added together and a first product (P1) is formed from this first sum amplitude (S1) and the amplitude ($A_{v+1}$) of the spectral line of the second highest frequency, that the amplitudes ($A_v$, $A_{v+2}$) of the two spectral lines of the second lowest and the highest frequency are added together and a second product (P2) is formed from this second sum amplitude (S2) and the amplitude ($A_v$) of the spectral line of the second lowest frequency, that either the first product (P1) is divided by the second product (P2) when the second lowest frequency of the four selected spectral lines is an even-numbered harmonic of the modulation frequency or the second product (P2) is divided by the first product when the second lowest frequency of the four selected spectral lines is an odd-numbered harmonic of the modulation frequency, that - when the second lowest spectral line frequency is an even-numbered harmonic of the modulation frequency - the quotient (Q) concerned is weighted by a factor which indicates the ratio of the ordinal number of that harmonic, which agrees with the second highest spectral line frequency, to the ordinal number of that harmonic, which agrees with the second lowest spectral line frequency or - when the second lowest spectral line frequency is an odd-numbered harmonic of the modulation frequency - the quotient (Q) concerned is weighted by the inverted factor and that the Sagnac phase ($\varphi$) is ascertained through application of the arctan function to the square root of the respective weighted quotient (Q).

2.  Arrangement for the ascertaining of angular velocities with the aid of an optical fibre ring interferometer which possesses at least one fibre-optical conductor turn with an equipment modulating the light waves propagating therein, wherein circuit units are present, which ascertain the amplitudes of some spectral lines of the interfering light waves issuing from the fibre-optical conductor and the Sagnac phase proportional to the angular velocity is ascertained therefrom, characterised thereby, that a first adder (A1) is present, which adds together the amplitudes ($A_{v-1}$, $A_{v+1}$) of the spectral lines of the lowest and the second highest frequency of four directly adjacent spectral lines, a first multiplier (M1) is present, which forms a first product (P1) from this first sum amplitude (S1) and the amplitude ($A_{v+1}$) of the spectral line of the second highest frequency, that a second adder (A2) adds together the amplitudes ($A_v$, $A_{v+2}$) of the two spectral lines of the second lowest and the highest frequency, that a second multiplier (M2) forms a second product (P2) from this second sum amplitude (S2) and the amplitude ($A_v$) of the spectral line of the second lowest frequency, that a divider (D) divides either the first product (P1) by the second product (P2) when the second lowest frequency of the four selected spectral lines is an even-numbered harmonic of the modulation frequency, or the second product (P2) by the first product (P1) when the second lowest frequency of the four selected spectral lines is an odd-numered harmonic of the modulation frequency, that circuit means (SP) are present, which - when the second lowest spectral line frequency is an even-numbered harmonic of the modulation frequency - weight the quotient (Q) concerned by a factor which indicates the ratio of the ordinal number of that harmonic, which agrees with the second highest spectral line frequency to the ordinal number of that harmonic, which agrees with the second lowest spectral line frequency or - when

6

the second lowest spectral line frequency is an odd-numbered harmonic of the modulation frequency - weight the quotient (Q) concerned by the inverted factor and that the circuit means (SP) apply the arctan function to the square root of the respective weighted quotient (Q), from which the Sagnac phase ($\varphi$) results.

3. Arrangement according to claim 2, characterised thereby, that the circuit means (SP) consist of a storage device, in which a value is storable, which reproduces the arctan of the respective quotient (Q) weighted by the factor and taken the root of, for each possible quotient (Q) arising from the division.


**Revendications**

1. Procédé de détermination de vitesses angulaires à l'aide d'un interféromètre optique à fibre en anneau, procédé dans lequel les ondes lumineuses parcourant au moins une spire de fibre optique sont sinusoïdalement modulées en phase et l'on détermine les amplitudes de quelques raies spectrales des ondes lumineuses interférentes sortant de la fibre optique, et l'on en déduit la phase de Sagnac proportionnelle à la vitesse angulaire,
caractérisé
par le fait que l'on détermine les amplitudes ($A_{v-1}$, $A_v$, $A_{v+1}$, $A_{v+2}$) de quatre raies spectrales directement voisines, on additionne les amplitudes ($A_{v-1}$, $A_{v+1}$) des deux raies spectrales qui, parmi les quatre raies choisies, ont la plus basse fréquence et la deuxième plus haute fréquence et, à partir de cette première amplitude-somme (S1) et de l'amplitude ($A_{v+1}$) de la raie spectrale ayant la deuxième plus haute fréquence, on forme un premier produit (P1);
par le fait que l'on additionne les amplitudes ($A_v$ et $A_{v+2}$) des deux raies spectrales ayant la deuxième plus basse fréquence et la plus haute fréquence et, à partir de cette deuxième amplitude-somme (S2) et de l'amplitude ($A_v$) de la raie spectrale ayant la deuxième plus basse fréquence, on forme un deuxième produit (P2), par le fait que l'on divise, selon le cas, soit le premier produit (P1) par le deuxième produit (P2) si, parmi les quatre raies spectrales choisies, la deuxième plus basse fréquence est un harmonique pair de la fréquence de modulation, soit le deuxième produit (P2) par le premier produit si, parmi les quatre raies spectrales choisies, la deuxième plus basse fréquence est un harmonique impair de la fréquence de modulation;
par le fait que, si la deuxième plus basse fréquence de raie spectrale est un harmonique pair de la fréquence de modulation, on pondère le quotient (Q) concerné avec un facteur qui représente le rapport du numéro d'ordre de l'harmonique correspondant à la deuxième plus haute fréquence de raie spectrale au numéro d'ordre de l'harmonique correspondant à la deuxième plus basse fréquence de raie spectrale, ou, selon le cas, si la deuxième plus basse fréquence de raie spectrale est un harmonique impair de la fréquence de modulation, on pondère le quotient concerné avec le facteur inversé;
et par le fait que l'on détermine la phase de Sagnac ($\varphi$) en appliquant la fonction arctangente à la racine carrée du quotient concerné (Q) ayant subi la pondération.

2. Dispositif de détermination de vitesses angulaires à l'aide d'un interféromètre optique à fibre en anneau comportant au moins une spire de fibre optique, ce dispositif comprenant un système modulant les ondes lumineuses s'y propageant, et des modules opératoires qui déterminent les amplitudes de quelques raies spectrales des ondes lumineuses interférentes sortant de la fibre optique et, à partir de cela, déterminent la phase de Sagnac proportionnelle à la vitesse angulaire,
caractérisé
par la présence d'un premier additionneur (A1) qui, parmi quatre raies spectrales directement voisines, additionne les amplitudes ($A_{v-1}$, $A_{v+1}$) de celles ayant la plus basse fréquence et la deuxième plus haute fréquence;
par la présence d'un multiplicateur (M1) qui, à partir de cette première amplitude-somme (S1) et de l'amplitude ($A_{v+1}$) de la raie spectrale ayant la deuxième plus haute fréquence, forme un premier produit (P1);
par le fait qu'un deuxième additionneur (A2) additionne les amplitudes ($A_v$, $A_{v+2}$) des deux raies spectrales ayant la deuxième ayant la deuxième plus basse fréquence et la plus haute fréquence;
par le fait qu'un deuxième multiplicateur (M2) forme un deuxième produit (P2) à partir de cette deuxième amplitude-somme (S2) et de l'amplitude ($A_v$) de la raie spectrale ayant la deuxième plus basse fréquence;
par le fait qu'un diviseur (D) divise, selon le cas, soit le premier produit (P1) par le deuxième produit (P2) si, parmi les quatre raies spectrales choisies, la deuxième plus basse fréquence est un harmonique pair de la fréquence de modulation, soit le deuxième produit (P2) par le premier produit (P1) si, parmi les quatre raies spectrales choisies, la deuxième plus basse fréquence est un harmonique impair de la fréquence de modulation;

par la présence de moyens opérateurs (SP) qui, si la deuxième plus basse fréquence de raie spectrale est un harmonique pair de la fréquence de modulation, pondèrent le quotient concerné (Q) avec un facteur qui représente le rapport du numéro d'ordre de l'harmonique correspondant à la deuxième plus haute fréquence de raie spectrale au numéro d'ordre de l'harmonique correspondant à la deuxième plus basse fréquence de raie spectrale, tandis que, si la deuxième plus basse fréquence de raie spectrale est un harmonique impair de la fréquence de modulation, ces moyens opérateurs (SP) pondèrent le quotient concerné (Q) avec le facteur inversé;

et par le fait que les moyens opérateurs (SP) appliquent la fonction arctangente à la racine carrée du quotient (Q) concerné pondéré, ce qui donne la phase de Sagnac.

3. Dispositif selon revendication 2, caractérisé par le fait que les moyens opérateurs (SP) sont constitués par une mémoire dans laquelle peut être déposée, pour chaque quotient possible (Q) résultant de la division, une valeur qui restitue l'arctangente de la racine carrée du quotient (Q) pondéré par le facteur.